# FASCICULE DE BREVET EUROPEEN

(11) **EP 3 551 522 B1**
(45) Date de publication et mention de la délivrance du brevet: **30.12.2020**
(21) Numéro de dépôt: 17803972.3
(22) Date de dépôt: 29.11.2017
(51) Int. Cl.: B62D 21/11, B62D 25/08, B62D 29/00

(54) **ASSEMBLAGE D'UN BERCEAU DE VÉHICULE SUR CAISSE COMPORTANT UNE PIÈCE DE FONDERIE**
MONTAGE EINER FAHRZEUGHALTERUNG AN EINER KAROSSERIE MIT EINEM GUSSTEIL
ASSEMBLY OF A VEHICLE CRADLE ON A BODY INCLUDING A CASTING

(30) Priorité: 06.12.2016 FR 1661986
(43) Date de publication de la demande: 16.10.2019
(73) Titulaire: RENAULT s.a.s., 92100 Boulogne-Billancourt (FR)
(72) Inventeur: CHEVALIER, Maxime, 78960 VOISINS LE BRETONNEUX (FR); JACQUES, Emmanuel, 78340 LES CLAYES SOUS BOIS (FR)
(86) Numéro de dépôt international: PCT/EP2017/080754
(87) Numéro de publication internationale: WO 2018/104119

(56) Documents cités:
- EP-A1- 1 508 508
- WO-A1-2014/097513
- DE-A1-102004 062 932
- DE-A1-102006 013 548
- US-A1- 2010 133 773
- US-A1- 2015 328 970

## Description

La présente invention concerne un assemblage d'un berceau sur caisse de véhicule, notamment de véhicule automobile, l'assemblage comportant une pièce de fonderie.

Par soucis d'allégement, la caisse en blanc du véhicule est conçue en aluminium. Le soubassement de la caisse comporte alors majoritairement une composition de profilés d'aluminium assemblés par collage, rivetage et/ou soudage, notamment pour les parties soumises à des contraintes mécaniques et/ou thermiques élevées.

Il s'agit de trouver une solution d'assemblage du berceau avec le soubassement et en particulier du berceau arrière avec les longerons arrière pour un véhicule dans lequel le groupe motopropulseur est disposé à l'arrière. Les fonctions de liaison au sol doivent également pouvoir s'assembler dans cette zone.

Généralement, les véhicules sont conçus par assemblage de pièces d'acier embouties. En effet, l'acier est facilement emboutissable et permet d'obtenir des pièces résistantes. Les longerons et le berceau arrière constituent alors de manière connue en soi une structure de pièces embouties. De même, les pièces assurant les fonctions de liaison au sol sont assemblées sur des pièces en acier plié ou embouti, rapportées sur la structure.

Dans le cadre d'un allégement de structure, l'utilisation de profilés extrudés limite les possibilités d'interfaçage des éléments de liaison au sol. La fonderie d'aluminium devient alors un procédé intéressant Le document DE 10 2004 062932 A1 divulgue un berceau en aluminium et une structure de caisse de véhicule comprenant au moins un longeron latéral en aluminium.

Le document FR2890641A1 divulgue des parties latérales de faux-châssis réalisées par moulage d'aluminium sous pression et soudées à une partie centrale de faux-châssis réalisée sous forme d'un profilé extrudé en aluminium. Le moulage sous pression est mieux adapté à la réalisation de pièces de faible épaisseur que de pièces massives. La faible épaisseur a pour inconvénient d'affaiblir la rigidité, inconvénient auquel le document antérieur propose de remédier en prévoyant des nervures de renforcement. Le montage d'un groupe motopropulseur sur le faux châssis divulgué, pose de nombreux problèmes comme par exemple mais non seulement, le soutien et le passage de l'arbre moteur vers les roues.

Pour remédier aux problèmes de l'état antérieur de la technique, l'invention a pour objet un assemblage de berceau en aluminium sur structure de caisse de véhicule comprenant au moins un longeron latéral en aluminium, caractérisé en ce qu'il comporte une pièce de fonderie d'aluminium comprenant une face supérieure fixée sous le longeron latéral, une ou plusieurs parties inférieures fixées sur le berceau, et une ouverture permettant un passage d'arbre moteur.

Avantageusement, la pièce de fonderie est obtenue par coulée gravitaire en coquille.

Particulièrement, la pièce de fonderie est constituée d'un alliage d'aluminium comprenant de 6,5 à 7,5% de silicium et de 0,25 à 0,45% de manganèse offrant une résistance à la traction comprise entre 285 et 295 MPa.

Particulièrement aussi, l'ouverture est sous forme de dépression concave semi-cylindrique pratiquée dans une face supérieure de la pièce de fonderie.

Particulièrement encore, la face supérieure de la pièce de fonderie d'aluminium est fixée sous le longeron latéral par des vis et/ou la ou les parties inférieures de la pièce de fonderie d'aluminium sont fixées sur le berceau par des vis.

De préférence, la pièce de fonderie d'aluminium comprend une première paire d'ailettes sur une paroi latérale pour enchâsser une extrémité de bras ou de première branche de triangle de suspension.

Plus particulièrement, la pièce de fonderie d'aluminium comprend une deuxième paire d'ailettes sur la même paroi latérale pour enchâsser une extrémité de biellette de pince.

Plus particulièrement aussi la pièce de fonderie d'aluminium comprend sur ladite paroi latérale une interface de fixation de chape pour enchâsser une extrémité de deuxième branche de triangle de suspension.

Notamment, ladite chape est en acier.

Avantageusement aussi, la pièce de fonderie d'aluminium comprend un méplat sur lequel est fixé un palier de barre stabilisatrice.

Particulièrement, le palier est en matériau polymère.

Avantageusement encore, l'assemblage comprend un étrier solidaire d'une poutre transversale du berceau et sur lequel est fixé un tirant de renforcement pour une biellette de reprise de couple.

De préférence, la structure de caisse comprend un longeron latéral droit et un longeron latéral gauche soudés à chaque extrémité d'une traverse centrale.

Particulièrement, le longeron latéral droit, le longeron latéral gauche et la traverse centrale sont des profilés d'aluminium extrudés à chaud.

D'autres caractéristiques et avantages de l'invention seront mieux compris à la lecture de la description d'un mode de réalisation nullement limitatif, et illustré par les dessins annexés, sur lesquels :
- la figure 1 est une vue schématique en perspective éclatée d'un assemblage de berceau sur caisse selon l'invention ;

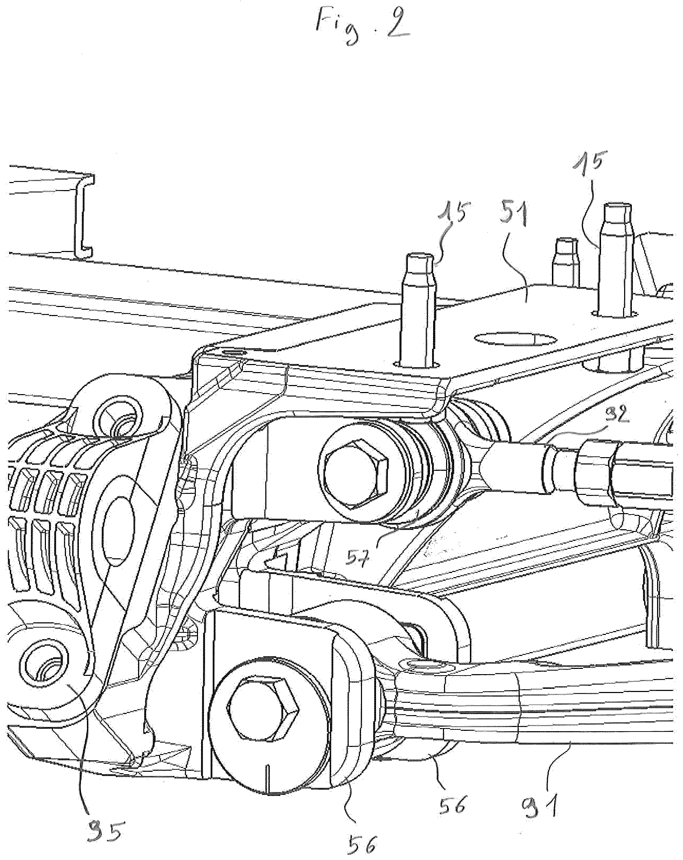

- la figure 2 est une vue schématique en perspective d'un détail de pièce de fonderie illustrant les principales fonctions de liaison au sol combinées à celles d'assemblage de la figure 1 ;
- la figure 3 est une vue schématique en perspective d'une face extérieure de la pièce de fonderie prévue pour un montage d'éléments de liaison au sol ;
- la figure 4 est une vue schématique en perspective éclatée des éléments de liaison au sol associées à la pièce de fonderie fixée sur le berceau :
- la figure 5 est une vue schématique en perspective d'une face intérieure de la pièce de fonderie prévue pour sa fixation sur le berceau.

L'assemblage conforme à l'invention permet d'obtenir des pièces résistantes, légères et compactes sur lesquelles les éléments de liaison au sol peuvent venir se monter aisément.

La conception de l'invention repose sur le choix de réaliser une pièce en fonderie d'aluminium qui permet le lien entre les longerons de la structure de caisse du véhicule et le berceau tout en offrant les fixations nécessaires aux éléments de liaison au sol. Ainsi, barre anti devers, triangle de suspension inférieur et biellette de pince peuvent venir s'arrimer solidement et avec les interfaces adéquates sur la pièce de fonderie. Le procédé de fonderie associé à une opération d'usinage offre une latitude appréciable dans les formes autorisées et leur précision. En outre, l'utilisation de la pièce de fonderie permet d'intégrer l'ensemble des fonctions dans un minimum d'espace, respectant ainsi les contraintes d'architecture du véhicule.

Dans l'exemple de mise en œuvre présenté ci-après à titre illustratif sur un véhicule à propulsion arrière, on comprendra comment la pièce de fonderie apporte aussi de la rigidité à la structure du véhicule et en particulier au niveau des longerons arrière largement entamés pour permettre le passage de l'arbre de transmission.

On décrit maintenant comment la pièce de fonderie assure trois fonctions essentielles qui comportent celles d'assembler le berceau arrière sur les longerons, d'offrir les interfaces des éléments de liaison au sol, et de rigidifier la structure.

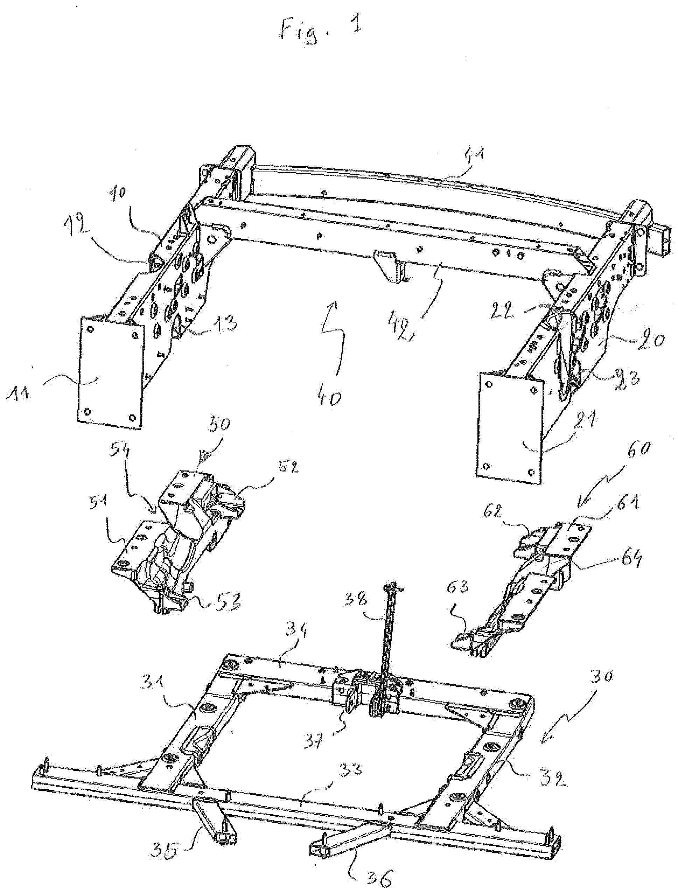

Sur la figure 1, on a représenté un assemblage de berceau 30 en aluminium pour véhicule sur une structure de caisse comprenant un longeron latéral droit 10 et un longeron latéral 20, l'un et l'autre en aluminium. La partie de structure de caisse 40 particulièrement décrite ici pour un véhicule à propulsion arrière, constitue une partie arrière de structure de caisse. L'homme du métier pourra aisément transposer tout au long de la lecture de la suite de la description, l'enseignement de l'invention à un véhicule à traction avant s'il en éprouve le besoin.

Dans le mode de réalisation exposé, chacun des longerons arrière 10, 20 comprend une face avant 11, 21 respective pour être fixée à une partie centrale de caisse constituant l'habitacle du véhicule, elle-même de préférence en aluminium, extrudé, embouti, ou plié et assemblé par collage-rivetage. Les longerons 10, 20, quant à eux, sont de préférence en aluminium extrudé à chaud.

La face latérale extérieure de chaque longeron 10, 20, en d'autres termes chaque face de longeron orientée vers un côté extérieur du véhicule, comporte une dépression concave 12, 22, conique à pointe orientée vers le bas, dépression ouverte à la fois côté le plus profond (base du cône) sur la face supérieure, et côté axe du cône sur la face latérale extérieure du longeron, pour permettre un passage d'amortisseur (non représenté).

Les longerons 10, 20, dimensionnés pour supporter un groupe motopropulseur, sont reliés en partie supérieure par une traverse centrale 42 et en extrémité arrière par une traverse extrême arrière 41, toutes deux en aluminium extrudé, soudé et/ou vissé. Le longeron latéral droit 10, le longeron latéral gauche 20 et la traverse centrale 42 sont par exemple des profilés rectilignes d'aluminium extrudés à chaud. La traverse extrême arrière 41 est par exemple un profilé d'aluminium extrudé puis cintré à chaud.

De préférence le longeron latéral droit 10 et le longeron latéral gauche 20 sont soudés à chaque extrémité de la traverse centrale 42 et la traverse extrême arrière 41 est fixée par vis en extrémités arrières des longerons 10, 20.

Une pièce 50 de fonderie d'aluminium comprend une face supérieure 51 qui est fixée sous le longeron 10. De préférence, la face supérieure 51 comporte une partie arrière 51a venant se fixer à une position arrière par rapport à la pointe du demi cône de la dépression concave 12, et une partie avant 51b venant se fixer à une position avant par rapport à la pointe du demi cône de la dépression concave 12. De la sorte, la pièce 50 de fonderie d'aluminium permet de renforcer le longeron 10 sous l'emplacement de la pointe de demi-cône formé par la dépression concave 12. Symétriquement, une pièce 60 de fonderie d'aluminium comprend une face supérieure 61 qui est fixée sous le longeron 20 de manière symétrique comparable à la pièce 50 de fonderie d'aluminium pour renforcer le longeron 20 sous l'emplacement de la pointe de demi-cône formé par la dépression concave 22.

Le berceau 30 est plus particulièrement ici un berceau arrière qui comprend une poutre latérale droite 31 et une poutre latérale gauche 32, reliées par une poutre transversale arrière 34 et par une poutre transversale avant 33. Les poutres 31 à 34 peuvent être réalisées en aluminium embouti et plié. Une réalisation des poutres 31 à 34 sous forme de profilés d'aluminium, par exemple obtenus par extrusion à chaud, procure une meilleure tenue mécanique et thermique. La poutre transversale avant 33 est débordante de chaque côté du berceau pour mieux se fixer sur l'unité centrale du véhicule. La poutre transversale arrière 34 supporte un étrier 37 dont il est solidaire, par exemple par liaison vissée, et sur lequel est fixé un tirant 38 de renforcement pour une biellette de reprise de couple moteur (non représentée).

Une poutre 35 oblique orientée à partir de la poutre 31 vers l'intérieur de l'habitacle en traversant la poutre 33 et une poutre 36 oblique orientée à partir de la poutre 32 vers l'intérieur de l'habitacle en traversant la poutre 33, permettent de diffuser les efforts par reprise sur le tunnel (non représenté) de passage de câbles et de conduites de l'avant de l'habitacle vers le compartiment moteur situé à l'arrière du véhicule.

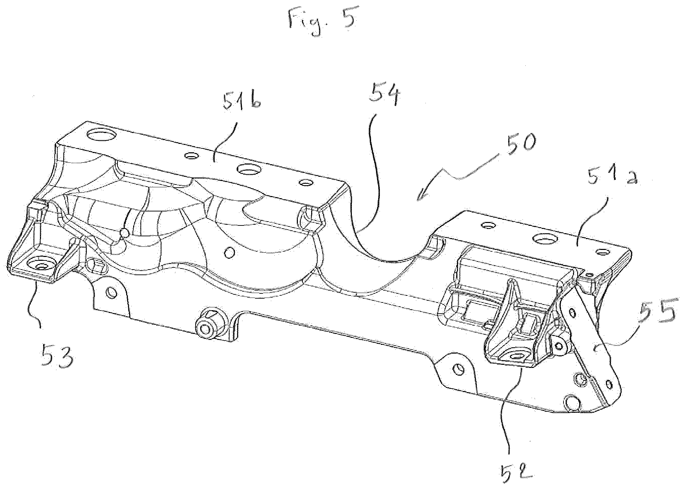

Au moins une partie inférieure de la pièce 50 de fonderie et de la pièce 60 de fonderie, est fixée sur le berceau 30. On entend par partie inférieure toute partie possible de la pièce de fonderie située en dessous de la face supérieure 51. Dans le mode de réalisation illustré par la figure 5, la pièce 50 de fonderie d'aluminium comprend en partie inférieure une excroissance 52 située à l'arrière d'une face latérale intérieure et une excroissance 53 située à l'avant de la face latérale intérieure. On entend par face latérale intérieure, toute face de la pièce de fonderie orientée, en d'autres termes regardant vers l'intérieur du compartiment moteur. Les excroissances 52, 53 peuvent être sur des parties inférieures de niveaux différents. Chaque excroissance 52, 53 comprend une surface qui est sensiblement mais non nécessairement rigoureusement parallèle à la face supérieure 51 de la pièce 50 de fonderie d'aluminium et qui est percée sensiblement en son centre pour permettre le passage d'une vis de fixation sur la face supérieure de la poutre latérale 31. De même, la pièce 60 de fonderie d'aluminium comprend en partie inférieure une excroissance 62 située à l'arrière d'une face latérale intérieure et une excroissance 63 située à l'avant de la face latérale intérieure comme on peut le voir aussi sur la figure 1.

La pièce 50 de fonderie comprend une ouverture 54 traversante de la face latérale intérieure à la face latérale extérieure pour permettre un passage d'arbre moteur du groupe motopropulseur vers la roue droite (non représentés). De la sorte, la pièce 50 de fonderie évite une fragilisation du longeron 10 par un passage de l'arbre moteur le traversant. On peut réaliser l'ouverture 54 sous forme tubulaire mais cette réalisation nécessite une pièce de fonderie suffisamment haute pour contenir le diamètre de la forme tubulaire nécessaire au passage de l'arbre moteur.

Pour réduire l'encombrement de la pièce 50 de fonderie, l'ouverture 54 est sous forme de dépression concave semi-cylindrique pratiquée dans la face supérieure 51 de la pièce 50 de fonderie. La face inférieure du longeron 10 comprend alors une dépression concave semi-cylindrique 13 agencée pour former un cylindre creux de diamètre suffisant au passage de l'arbre moteur lorsque la dépression concave semi-cylindrique 13 est disposée au-dessus et en regard de l'ouverture 54 sous forme de dépression concave semi-cylindrique. La partie arrière 51a de la face supérieure 51 vient alors se fixer en position arrière par rapport à la dépression concave semi-cylindrique constituant l'ouverture 54, et la partie avant 51b vient alors se fixer en position avant par rapport à la dépression concave semi-cylindrique constituant l'ouverture 54. De la sorte, la pièce 50 de fonderie renforce à encombrement minimal, l'endroit du longeron 10 dans lequel on peut pratiquer une ouverture suffisante par dépression concave, en combinaison avec celle de la pièce de fonderie pour le passage de l'arbre moteur, ainsi que dans son voisinage proche on peut pratiquer l'ouverture 12, elle aussi par dépression concave, suffisante pour le passage de l'amortisseur (non représenté) au plus près du longeron 10.

De même, la pièce 60 de fonderie comprend une ouverture 64 traversante de la face latérale intérieure à la face latérale extérieure pour permettre un passage d'arbre moteur du groupe motopropulseur vers la roue gauche (non représentés).

Il est possible d'obtenir chaque pièce de fonderie d'aluminium par moulage sous pression, en prenant les mesures nécessaires bien connues pour éviter les phénomènes de retrait au refroidissement et de microbulles, comme par exemple par utilisation de masselotte. Pour atteindre plus facilement les caractéristiques mécaniques requises, chaque pièce 50, 60 de fonderie est obtenue par coulée gravitaire d'aluminium. Avantageusement par rapport au moule à sable, la coulée gravitaire en coquille permet l'utilisation et la réutilisation d'un moule permanent.

Le procédé de coulée gravitaire en coquille permet d'obtenir des caractéristiques mécaniques particulièrement remarquables de chaque pièce 50, 60 de fonderie par utilisation d'un alliage d'aluminium approprié, notamment d'un alliage d'aluminium comprenant de 6,5 à 7,5% de silicium et de 0,25 à 0,45% de manganèse qui offre une résistance à la traction comprise entre 285 et 295 MPa.

La face supérieure 51, respectivement 61 de la pièce 50, respectivement 60, de fonderie d'aluminium, est fixée sous le longeron 10, respectivement 20 par des vis 15. De manière comparable, la ou les parties inférieures 52, 53, respectivement 62, 63 de la pièce 50, respectivement 60, de fonderie d'aluminium, sont fixées sur la face supérieure de la poutre 31, respectivement 32 du berceau 30 par des vis. On utilise de préférence des vis en acier pour les caractéristiques mécaniques de ce métal particulièrement appropriées à la fixation, préalablement soumises à un traitement zinc-nickel pour ses caractéristiques de mise en compatibilité de l'acier en contact avec l'aluminium.

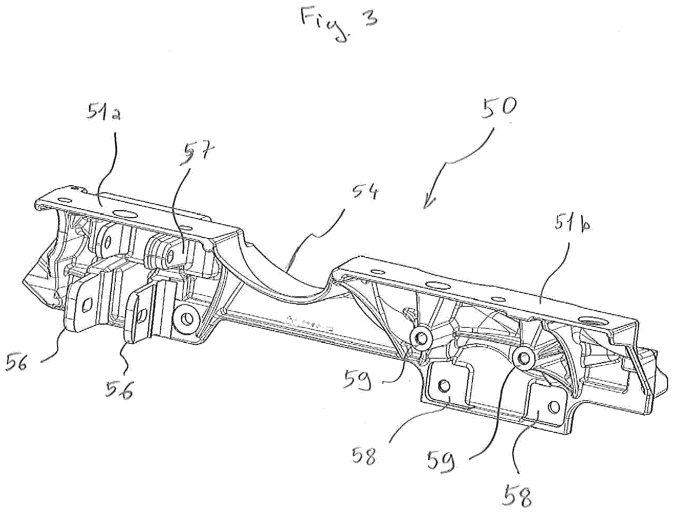

Comme illustré par la figure 3, la pièce 50 de fonderie d'aluminium, et de même symétriquement la pièce 60 de fonderie d'aluminium, comprend une première paire d'ailettes 56 sur une paroi latérale pour enchâsser une extrémité de bras ou de première branche 91 de triangle de suspension. Notamment, la paire d'ailettes 56 émerge perpendiculairement à la face latérale externe de la pièce 50 de fonderie d'aluminium, sous la partie arrière 51a de la face supérieure 51. Chaque ailette est transpercée sensiblement en son centre par une ouverture permettant un passage d'axe ou de vis 97 de maintien de bras ou de première branche 91 de triangle de suspension 90.

La pièce 50, et de même symétriquement la pièce 60, de fonderie d'aluminium comprend une deuxième paire d'ailettes 57 sur ladite paroi latérale pour enchâsser une extrémité de biellette de pince 92.

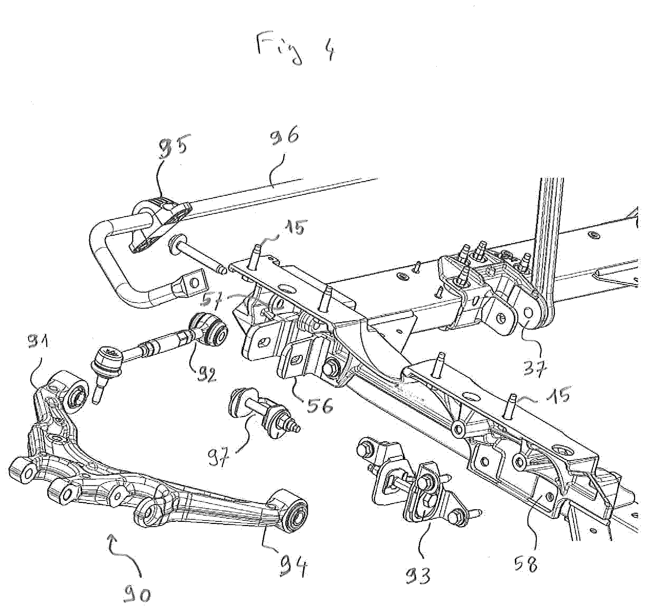

La pièce 50, et de même symétriquement la pièce 60, de fonderie d'aluminium comprend aussi sur la paroi latérale une interface 58, 59 de fixation de chape 93. Comme illustré par la figure 4, la chape 93 comprend deux parois verticales pour enchâsser une extrémité de deuxième branche 94 de triangle de suspension. Une fabrication en acier de la chape 93 permet de plier une partie supérieure orientée vers l'extérieur et une partie inférieure orientée vers l'intérieure de chaque paroi verticale, sans perte de qualité mécanique, pour venir s'appliquer respectivement contre deux excroissances 59 et contre deux méplats verticaux 58 de l'interface pour y être fixées par des vis.

De plus, pièce 50, et de même symétriquement la pièce 60, de fonderie d'aluminium comprend un méplat 55 oblique sur lequel est fixé un palier 95 de barre stabilisatrice 96. Une réalisation du palier 95 en matériau polymère contribue à l'allégement de l'assemblage.

La pièce de fonderie permet ainsi d'intégrer des interfaces de liaison du véhicule au sol, en plus de sa fonction de lien entre le berceau et la structure de caisse.

## Revendications

1. Assemblage d'un berceau (30) en aluminium de véhicule sur structure de caisse comprenant au moins un longeron latéral (10, 20) en aluminium, **caractérisé en ce qu'**il comporte une pièce (50, 60) de fonderie d'aluminium comprenant une face supérieure (51, 61) fixée sous ledit longeron (10, 20), une ou plusieurs parties inférieures (52, 53, 62, 63) fixées sur ledit berceau (30), et une ouverture (54, 64) permettant un passage d'arbre moteur.

2. Assemblage selon la revendication 1, **caractérisé en ce que** ladite pièce (50, 60) de fonderie est obtenue par coulée gravitaire en coquille.

3. Assemblage selon la revendication 1 ou 2, **caractérisé en ce que** ladite pièce (50, 60) de fonderie est constituée d'un alliage d'aluminium comprenant de 6,5 à 7,5% de silicium et de 0,25 à 0,45% de manganèse offrant une résistance à la traction comprise entre 285 et 295 MPa.

4. Assemblage selon l'une quelconque des revendications précédentes, **caractérisé en ce que** ladite ouverture (54, 64) est sous forme de dépression concave semi-cylindrique pratiquée dans ladite face supérieure (51, 61).

5. Assemblage selon l'une quelconque des revendications précédentes, **caractérisé en ce que** ladite face supérieure (51, 61) de la pièce (50, 60) de fonderie d'aluminium est fixée sous ledit longeron (10, 20) par des vis (15).

6. Assemblage selon l'une quelconque des revendications précédentes, **caractérisé en ce que** la ou les parties inférieures ladite pièce (50, 60) de fonderie d'aluminium (52, 53, 62, 63) sont fixées sur ledit berceau (30) par des vis.

7. Assemblage selon l'une quelconque des revendications précédentes, **caractérisé en ce que** la pièce (50, 60) de fonderie d'aluminium comprend une première paire d'ailettes (56) sur une paroi latérale pour enchâsser une extrémité de bras ou de première branche (91) de triangle de suspension.

8. Assemblage selon la revendication précédente, **caractérisé en ce que** la pièce (50, 60) de fonderie d'aluminium comprend une deuxième paire d'ailettes (57) sur ladite paroi latérale pour enchâsser une extrémité de biellette de pince (92).

9. Assemblage selon l'une quelconque des revendications 7 ou 8, **caractérisé en ce que** la pièce (50, 60) de fonderie d'aluminium comprend sur ladite paroi latérale une interface (58, 59) de fixation de chape (93) pour enchâsser une extrémité de deuxième branche (94) de triangle de suspension.

10. Assemblage selon la revendication précédente, **caractérisé en ce que** ladite chape (93) est en acier.

11. Assemblage selon l'une quelconque des revendications précédentes, **caractérisé en ce que** ladite pièce (50, 60) de fonderie d'aluminium comprend un méplat (59) sur lequel est fixé un palier (95) de barre stabilisatrice (96).

12. Assemblage selon la revendication précédente, **caractérisé en ce que** ledit palier (95) est en matériau polymère.

13. Assemblage selon l'une quelconque des revendications précédentes, **caractérisé en ce qu'**il comprend un étrier (37) solidaire d'une poutre transversale du berceau (30) et sur lequel est fixé un tirant de renforcement pour une biellette de reprise de couple.

14. Assemblage selon l'une quelconque des revendications précédentes, **caractérisé en ce que** la structure de caisse comprend un longeron latéral droit (10) et un longeron latéral gauche (20) soudés à chaque extrémité d'une traverse centrale (42).

15. Assemblage selon la revendication 14, **caractérisé en ce que** le longeron latéral droit (10), le longeron latéral gauche (20) et la traverse centrale (42) sont des profilés d'aluminium extrudés à chaud.

## Patentansprüche

1. Anordnung zur Montage eines Hilfsrahmens (30) aus Aluminium eines Fahrzeugs an einer Karosseriestruktur, die wenigstens einen seitlichen Längsträger (10, 20) aus Aluminium umfasst, **dadurch gekennzeichnet, dass** sie ein Aluminiumgussteil (50, 60) aufweist, das eine unter dem Längsträger (10, 20) befestigte Oberseite (51, 61), einen oder mehrere auf dem Hilfsrahmen (30) befestigte untere Teile (52, 53, 62, 63) und eine Öffnung (54, 64), die einen Durchgang einer Antriebswelle ermöglicht, umfasst.

2. Montageanordnung nach Anspruch 1, **dadurch gekennzeichnet, dass** das Gussteil (50, 60) durch Schwerkraftkokillenguss erhalten wird.

3. Montageanordnung nach Anspruch 1 oder 2, **dadurch gekennzeichnet, dass** das Gussteil (50, 60) aus einer 6,5 bis 7,5 % Silizium und 0,25 bis 0,45 % Mangan umfassenden Aluminiumlegierung besteht, die eine Zugfestigkeit zwischen 285 und 295 MPa aufweist.

4. Montageanordnung nach einem der vorhergehenden Ansprüche, **dadurch gekennzeichnet, dass** die Öffnung (54, 64) die Form einer halbzylinderförmigen konkaven Vertiefung aufweist, die in der Oberseite (51, 61) ausgebildet ist.

5. Montageanordnung nach einem der vorhergehenden Ansprüche, **dadurch gekennzeichnet, dass** die Oberseite (51, 61) des Aluminiumgussteils (50, 60) unter dem Längsträger (10, 20) mit Schrauben (15) befestigt ist.

6. Montageanordnung nach einem der vorhergehenden Ansprüche, **dadurch gekennzeichnet, dass** die unteren Teile (52, 53, 62, 63) des Aluminiumgussteils (50, 60) auf dem Hilfsrahmen (30) mit Schrauben befestigt sind.

7. Montageanordnung nach einem der vorhergehenden Ansprüche, **dadurch gekennzeichnet, dass** das Aluminiumgussteil (50, 60) an einer Seitenwand ein erstes Paar Flügel (56) zum Einpassen eines Endes eines Armes oder eines ersten Schenkels (91) eines Dreieckslenkers umfasst.

8. Montageanordnung nach dem vorhergehenden Anspruch, **dadurch gekennzeichnet, dass** das Aluminiumgussteil (50, 60) an der Seitenwand ein zweites Paar Flügel (57) zum Einpassen eines Endes einer Spurstange (92) .

9. Montageanordnung nach einem der Ansprüche 7 oder 8, **dadurch gekennzeichnet, dass** das Aluminiumgussteil (50, 60) an der Seitenwand eine Verbindungsstelle (58, 59) zur Befestigung eines Gabelstücks (93) zum Einpassen eines Endes eines zweiten Schenkels (94) eines Dreieckslenkers umfasst.

10. Montageanordnung nach dem vorhergehenden Anspruch, **dadurch gekennzeichnet, dass** das Gabelstück (93) aus Stahl besteht.

11. Montageanordnung nach dem vorhergehenden Anspruch, **dadurch gekennzeichnet, dass** das Aluminiumgussteil (50, 60) eine Abflachung (59) umfasst, an welcher ein Lager (95) einer Stabilisatorstange (96) befestigt ist.

12. Montageanordnung nach dem vorhergehenden Anspruch, **dadurch gekennzeichnet, dass** das Lager (95) aus Polymermaterial besteht.

13. Montageanordnung nach einem der vorhergehenden Ansprüche, **dadurch gekennzeichnet, dass** sie einen Bügel (37) umfasst, der mit einem Querträger des Hilfsrahmens (30) fest verbunden ist und an dem ein Verstärkungsstab für eine Drehmomentstütze befestigt ist.

14. Montageanordnung nach einem der vorhergehenden Ansprüche, **dadurch gekennzeichnet, dass** die Karosseriestruktur einen rechten seitlichen Längsträger (10) und einen linken seitlichen Längsträger (20) umfasst, die an ein jeweiliges Ende eines mittleren Querträgers (42) angeschweißt sind.

15. Montageanordnung nach Anspruch 14, **dadurch gekennzeichnet, dass** der rechte seitliche Längsträger (10), der linke seitliche Längsträger (20) und der mittlere Querträger (42) warm stranggepresste Aluminiumprofile sind.

## Claims

1. Assembly of a vehicle aluminum cradle (30) on a body structure, comprising at least one lateral side rail (10, 20) made of aluminum, **characterized in that** it comprises an aluminum casting (50, 60) comprising an upper face (51, 61) secured below said side rail (10, 20), one or a plurality of lower parts (52, 53, 62, 63) secured on said cradle (30), and an opening (54, 64) which permits passage of the drive shaft.

2. Assembly according to Claim 1, **characterized in that** said casting (50, 60) is obtained by gravity die casting.

3. Assembly according to Claim 1 or 2, **characterized in that** said casting (50, 60) is constituted by an aluminum alloy comprising 6.5 to 7.5% silicon and 0.25 to 0.45% manganese providing resistance to traction of between 285 and 295 MPa.

4. Assembly according to any one of the preceding claims, **characterized in that** said opening (54, 64) is in the form of a semi-cylindrical concave depression provided in said upper face (51, 61).

5. Assembly according to any one of the preceding claims, **characterized in that** said upper face (51, 61) of the aluminum casting (50, 60) is secured below said side rail (10, 20) by means of screws (15) .

6. Assembly according to any one of the preceding claims, **characterized in that** the lower part(s) (52, 53, 62, 63) of said aluminum casting (50, 60) is/are secured on said cradle (30) by means of screws.

7. Assembly according to any one of the preceding claims, **characterized in that** the aluminum casting (50, 60) comprises a first pair of fins (56) on a lateral wall in order to mount an end of an arm or of a first branch (91) of a suspension triangle.

8. Assembly according to the preceding claim, **characterized in that** the aluminum casting (50, 60) comprises a second pair of fins (57) on said lateral wall in order to mount an end of a clamp rocker bar (92).

9. Assembly according to either of Claims 7 and 8, **characterized in that** the aluminum casting (50, 60) comprises on said lateral wall an interface (58, 59) for securing of a clevis (93) in order to mount an end of a second branch (94) of a suspension triangle.

10. Assembly according to the preceding claim, **characterized in that** said clevis (93) is made of steel.

11. Assembly according to any one of the preceding claims, **characterized in that** said aluminum casting (50, 60) comprises a flattened part (59) on which a stabilizing bar (96) bearing (95) is secured.

12. Assembly according to the preceding claim, **characterized in that** said bearing (95) is made of polymer material.

13. Assembly according to any one of the preceding claims, **characterized in that** it comprises a stirrup (37) which is integral with a transverse beam of the cradle (30), and on which there is secured a reinforcement tie rod for a torque absorption rocker bar.

14. Assembly according to any one of the preceding claims, **characterized in that** the body structure comprises a right lateral side rail (10) and a left lateral side rail (20) which are welded on each end of a central cross-member (42).

15. Assembly according to Claim 14, **characterized in that** the right lateral side rail (10), the left lateral side rail (20) and the central cross-member (42) are hot-extruded aluminum profiles.
